# EUROPEAN PATENT APPLICATION

(11) **EP 1 653 213 A1**
(43) Date of publication of application: **03.05.2006**
(21) Application number: 04770919.1
(22) Date of filing: 26.07.2004
(51) Int. Cl.: G01N 13/16

(54) **SCANNING-TYPE PROBE MICROSCOPE**

(30) Priority: 29.07.2003 JP 2003281533
(71) Applicant: TOUDAI TLO, Ltd., Tokyo 113-0033 (JP)
(72) Inventor: MIYANO, Kenjiro, 1810001 (JP); OGAWA, Naoki, 1540005 (JP)
(74) Representative: Read, Matthew Charles
(86) International application number: PCT/JP2004/010608
(87) International publication number: WO 2005/010501

(57) **Abstract**

A scanning-type probe microscope easily usable even in a severe environment. An optical fiber (32) irradiates light from a laser diode (31) toward the surface of a cantilever (1). The irradiated light is collected by a lens (33) and irradiated to the surface of the cantilever (1). The light reflected by the surface of the cantilever (1) is collected by lenses (411, 412) and inputted into optical fibers (421, 422). The light passed through the optical fibers (421, 422) is received by photodiodes (431, 432). The inclination of the cantilever (1) is detected based on variation in the amount of light received.

## Description

### Technical Field

The present invention relates to a scanning probe microscope, and particularly relates to a scanning probe microscope employing optical lever techniques.

### Background Art

In the related art, scanning probe microscopes employing optical lever techniques are well-known (for example, refer to Japanese Patent Document 1 and Non-Patent Documents 1 and 2). In this specification, "scanning probe microscope" refers to microscopes capable of employing optical lever techniques such as AFMs (Atomic Force Microscopes) and magnetic force microscopes etc. Further, with AFMs, states where a probe tip does not make contact with a sample surface, and does make contact with a sample surface exist. The scanning probe microscopes of this specification include both states.

With scanning probe microscopes of the related art (in this description hereinafter simply referred to as "SPMs"), the surface of a cantilever is irradiated with laser light, and reflected light is incident to a photodiode. The position of the cantilever can then be detected based on changes in the amount of incident light.

In the related art, a photodiode constituting a light-receiving element has been arranged in the vicinity of the cantilever in order to bring about an increase in the amount of incident light.

However, when a photodiode is in the vicinity of a sample, when the sample is subjected to a particularly sever environment such as extremely low temperatures, a high vacuum or a strong magnetic field, it is possible that the environment will have an effect on the photodiode so as to make measurement difficult.

Further, with SPMs of the related art, it has been necessary to move the sample because causing the cantilever to move so as to scan the sample has been difficult. This has caused the device to be large and presented the problem that using a large sample is difficult.

In order to resolve this problem, it has been proposed to detect changes in the cantilever using an optical fiber interferometer. However, this method has the problem that handling is difficult.

### [Japanese Patent Document 1]

[0008] Japanese Patent Laid-open Publication No. Hei. 6-323847.

### [Non-patent document 1]

Gerhard Meyer and Nabil M. Amer, Appl. Phys. Lett. 53, 1045 (1988)

### [Non-patent document 1]

S. Alexander, L. Hellemans, O. Marti, J. Schneir, V. Elings, P. K. Hansma, Matt Longmire, and John Gurley, J. Appl Phys. 65, 164 (1989)

### Disclosure of the Invention

In order to resolve this situation, it is therefore advantageous for the present invention to provide a scanning probe microscope that is easy to use even under sever environments.

The scanning probe microscope of the present invention is therefore comprised of a cantilever, light-emitting section, and light-receiving section. The light-emitting section is equipped with a light emitting element and an input waveguide. The input waveguide is configured so that light from the light-emitting section is irradiated towards the surface of the cantilever. The light receiving section is equipped with an output waveguide and a light-receiving element. The output waveguide is configured so that light reflected by the surface is guided towards the light-receiving element.

The input waveguide and the output waveguide may both be configured using optical fiber.

The output waveguide may both be configured using a plurality of optical fibers.

Substantially spherical-shaped lenses for focusing light reflected from the cantilever onto the plurality of optical fibers may be respectively arranged at the ends of the plurality of optical fibers, or alternatively each set of lenses may be taken to have substantially flat facing surfaces and be next to each other.

It is also possible to fit a tip probe to the end of the cantilever.

The light-emitting element may also be a laser diode.

The light-receiving element may also be a photodiode.

According to the scanning probe microscope of the present invention, it is possible to provide a scanning probe microscope that is straightforward to use under severe environments.

### Best Mode for Carrying Out the Invention

### Embodiments

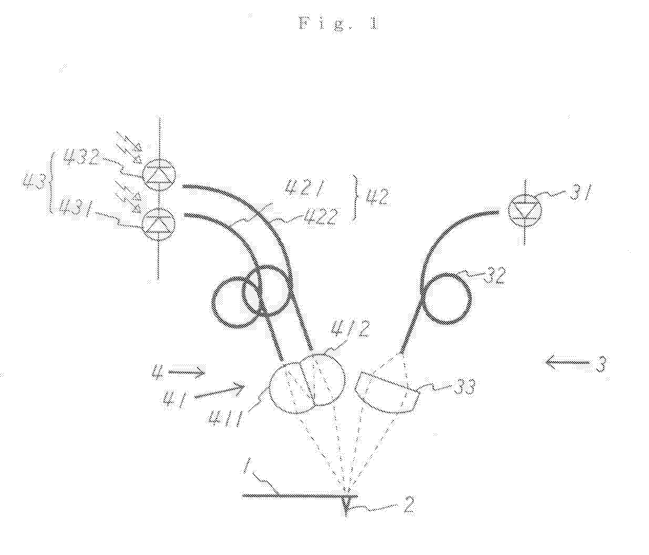

A scanning probe microscope (SPM) of an embodiment of the present invention is described with reference to FIG.1. This SPM is comprised of a cantilever 1, probe tip 2, light-emitting section 3, and light-receiving section 4.

The cantilever 1 is a cantilever with a supported base section, with the tip position changing as a result of force applied to the tip. The probe tip 2 is fitted to the lower surface of the end of the cantilever 1. This configuration is the same as for an SPM of the related art.

The light-emitting section 3 is equipped with a light-emitting element 31, input waveguide 32, and lens 33. The light-emitting element 31 may be a laser diode, for example. The light-emitting element 31 is driven by a circuit (not shown).

In this embodiment, the input waveguide 32 is configured from a single optical fiber. The input waveguide 32 is configured so as to transmit light from the vicinity of the light-emitting element 31 to the lens 33. As a result, the input waveguide 32 is capable of irradiating light from the light-emitting element 31 towards the surface of the cantilever 1.

The lens 33 is configured so as to focus light from the input waveguide 32 and irradiate this light onto the surface of the cantilever 1. In this embodiment, a plano-convex lens is used as the lens 33.

The light-receiving section 4 is equipped with a lens 41, output waveguide 42, and light-receiving element 43. The lens 41 is configured from two spherical lenses 411 and 412. Opposing surfaces of the two spherical lenses 411 and 412 are formed substantially flat, are next to each other, and are bonded to each other (refer to FIG. 1).

In this embodiment, the output waveguide 42 is constructed from two optical fibers 421 and 422. Here, the number of optical fibers is taken to be one, but may also be three or more. One end of the optical fiber 421 is capable of receiving light focused by the spherical lens 411. One end of the optical fiber 422 is capable of receiving light focused by the spherical lens 412. The other ends of the optical fibers 421 and 422 extend as far as the light-receiving element 43. Namely, the output waveguide 42 is configured so that light reflected by the surface of the cantilever 1 is guided to the light-receiving element 43.

In this embodiment, the light-receiving element 43 is configured from two photodiodes 431 and 432. The photodiode 431 is arranged at a position facing the other end of the optical fiber 421 and receives light from the optical fiber 421. The photodiode 432 is arranged at a position facing the other end of the optical fiber 422 and receives light from the optical fiber 422. The light-receiving element 43 is connected to a circuit (not shown) and provides outputs due to light received by each of the photodiodes 431 and 432.

Next, a description is given of the operation of an SPM of this embodiment configured in the above manner. First, light is generated by the light-emitting element 31. As a result, light is irradiated onto the surface of the cantilever 1 via the input waveguide 32 and the lens 33. Light reflected by the surface of the cantilever 1 is then irradiated onto the light-receiving element 43 via the lens 41 and the output waveguide 42. At the light-receiving element 43, electromotive force is generated according to the amount of light received, and the amount of received light is calculated from this electromotive force.

In this state, as with the SPM of the related art, the sample is scanned by the probe tip 2. In doing so, the position of the tip of the cantilever 1 changes in accompaniment with relative movement between the probe tip and the sample. As a result, the angle of reflection of light at the cantilever 1 changes and the amount of light incident to the lens 41 changes. For example, the amount of light incident to the lens 411 increases, and the amount of light incident to the lens 412 decreases. As a result of this, the electromotive force occurring at the photodiodes 431 and 432 changes. The amount of change in the cantilever 1 (i.e. in the case of an AFM, the surface shape of a sample) can then be detected based on this fluctuation.

In this embodiment, it is possible to distance the light-receiving element 43 from the cantilever 1 by using the output waveguide 42. In doing so, the light-receiving element 43 can be distanced from an environment even when the cantilever 1 is placed under severe conditions such as extremely low temperatures or strongmagnetic fields and it is therefore possible to detect the amount of light received in a precise manner. Namely, measurement is possible using an SPM even under severe conditions.

In this embodiment, the light-emitting element 31 is also distanced from the cantilever 1 by the input waveguide 32. As a result, in this embodiment, it is possible for the cantilever 1, lens 33, tip of the input waveguide 32, lens 41, and tip of the output waveguide 42 to be made to move independently from the light-emitting element 31 and the light-receiving element 43. Because of this, it is straightforward to make the cantilever 1 move with respect to the sample. This means that, according to an SPM of this embodiment, it is not necessary to move the sample, and it is also possible to handle large samples.

Moreover, in this embodiment, the two photodiodes 431 and 432 are irradiated with light using the two optical fibers 421 and 422. This means that differential detection is possible and it is possible to increase the strength of signals obtained as output. This also makes detection of microscopic changes in the amount of light straightforward.

Moreover, in this embodiment, it is possible to take stable measurements compared with the case of using a single optical fiber because two optical fibers 421 and 422 are used. In the event that a single optical fiber is used, when the amount of light received by these fibers is increased or reduced, this corresponds to the displacement of the cantilever 1. However, errors occur due to disturbances (for example, changes in the amount of irradiation itself and noise). Further, when displacement of the cantilever 1 becomes larger than a certain extent, it is no longer possible to detect displacement in excess of this due to reduction in the amount of light received. According to this embodiment, it is possible to counteract disturbances because two optical fibers are used, and the number of measurement errors can be reduced compared to the case of using a single optical fiber. Further, according to this embodiment, it is also possible to increase the range of displacement of the cantilever 1 that can be measured.

In this embodiment, two lenses, the spherical lenses 411 and 412, are used as the lens 41. This means that it is possible to focus and input reflected light from the cantilever 1 to the optical fibers 421 and 422. Further, the opposing surfaces of the lenses 411 and 412 are taken to be substantially flat, and also neighbor each other, and the intervening space can therefore be made small. First Embodiment

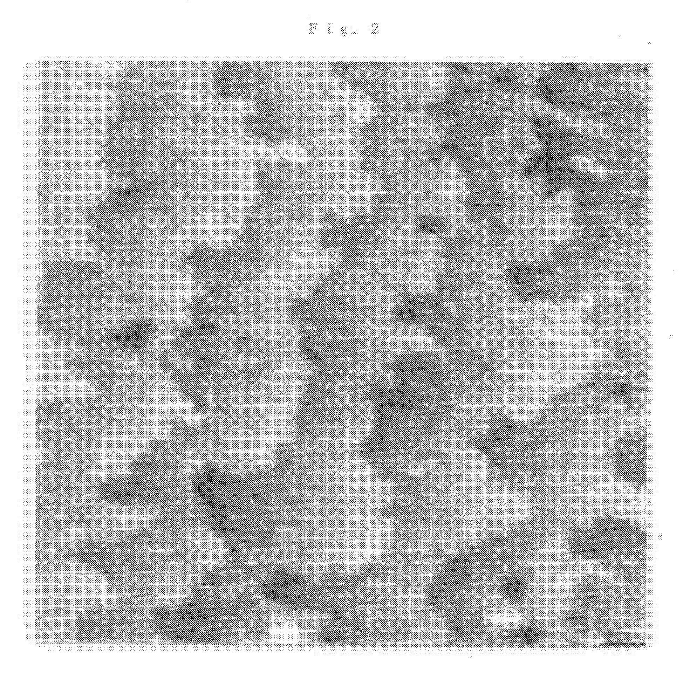

The SPM of the aforementioned embodiment is used as an AFM and measurements are carried out under the following conditions. The results are shown in FIG. 2.

(Measurement Conditions)
controller: JOEL JSTM4200D
Light source: Wavelength 680nm laser diode (HL6738MG, Hitachi)
Input waveguide: Single mode optical fiber (FS-SN-3224, 3M)
Input lens: Plano-convex lens, diameter 1mm (45589-E, Edmund Industrial Optics)
Input lens focal length: approximately 3mm
Cantilever and probe tip: AC-mode Si cantilever (NSC12C, µ mash)
Distance from cantilever to light-receiving lens: approximately 3mm
Spherical lens (light-receiving lens): 45538-E, Edmund Industrial Optics (processed)
Output waveguide: Multimode fiber (FIP100110125, Polymicro Technologies)
Light-receiving element: SiPIN photodiode (S7797, Hamamatsu Photonics used as a differential detector)
Sample: SrTiO₃ substrate (having a unit lattice step)
Sample measurement range: 5µm (5 micrometers) × 5µm (5 micrometers)

Under these conditions it was possible to obtain the topographic image shown in FIG. 2. It was possible to observe a step terrace structure. The amplitude it was possible to measure was 0.4 Angstroms and under.

The scanning probe microscope of the present invention is by no means limited to the embodiment described above and various modifications are possible without deviating from the spirit of the present invention.

For example, it is also possible to employ another focusing mechanism such as a transparent cone in place of the lens 41. Further, Lens 41 can be omitted. In this case, it is necessary to put one end of the output waveguide 42 sufficiently close to the cantilever 1.

Similarly, it is also possible to use another focusing mechanism in place of the lens 33 or this installation may be omitted. In the latter case, it is necessary for the end of the input waveguide 32 to be sufficiently close to the cantilever 1.

If installation of the lens 41 etc. is omitted, it is possible to make the device smaller, and the optical system can be simplified. This makes moving the cantilever 1 with respect to the sample much more straightforward.

### Brief Description of the Drawings

FIG. 1 is a view illustrating an outline configuration for a scanning probe microscope of an embodiment of the present invention.
FIG. 2 is a photograph showing measurement results for the first embodiment of the present invention.

## Claims

1. A scanning probe microscope comprising:
a cantilever;
a light-emitting section; and
a light-emitting section,
the light-emitting section comprising a light emitting element and an input waveguide,
wherein the input waveguide irradiates light from the light-emitting section towards the surface of the cantilever, the light receiving section comprising an output waveguide and a light-receiving element, and the output waveguide guides light reflected by the surface towards the light-receiving element.

2. The scanning probe microscope as disclosed in claim 1, wherein the input waveguide and the output waveguide are both made of optical fiber.

3. The scanning probe microscope as disclosed in either one of claim 1 or claim 2, wherein the output waveguide is made of a plurality of optical fibers.

4. The scanning probe microscope as disclosed in claim 3, wherein substantially spherical-shaped lenses for focusing light reflected from the cantilever onto the plurality of optical fibers are arranged at the ends of the plurality of optical fibers, and each set of lenses are taken to have substantially flat facing surfaces and be next to each other.

5. The scanning probe microscope as disclosed in any one of claims 1 to 4, wherein a tip probe is fitted at an end of the cantilever.

6. The scanning probe microscope as disclosed in any one of claims 1 to 5, wherein the light-emitting element is a laser diode.

7. The scanning probe microscope as disclosed in any one of claims 1 to 6, wherein the light-receiving element is a photodiode.
